# DEMANDE DE BREVET EUROPEEN

(11) **EP 1 095 844 A1**
(43) Date de publication de la demande: **02.05.2001**
(21) Numéro de dépôt: 00402950.0
(22) Date de dépôt: 25.10.2000
(51) Int. Cl.: B62D 25/08, B62D 29/00

(54) **Pièce de structure de véhicule automobile, notamment face avant technique**

(30) Priorité: 25.10.1999 FR 9913286
(71) Demandeur: COMPAGNIE PLASTIC OMNIUM, 69007 Lyon (FR)
(72) Inventeur: Cheron, Hugues, 01800 Bourg Saint Christophe (FR); Copier, Frédéric, 01580 Izernore (FR); Busolin, Johnny, 01430 Maillat (FR); Alphan, Yves, 01100 Oyonnax (FR); Pierrot, Frédéric, 01100 Bellignat (FR)
(74) Mandataire: Remy, Vincent Noel Paul

(57) **Abrégé**

L'invention concerne une pièce de structure de véhicule automobile, notamment une face avant technique, comprenant une partie fonctionnelle (7 ; 8 ; 9) en matière plastique.moulée destinée à supporter des organes fonctionnels du véhicule et une partie structurelle destinée à résister aux différentes sollicitations mécaniques engendrées par l'utilisation du véhicule, la partie structurelle étant constituée par l'association de deux ensembles rigides à savoir, d'une part, un réseau (1) de nervures de rigidification et, d'autre part, des renforts métalliques (2).

La partie fonctionnelle et l'un des ensembles rigides sont réalisés d'un seul tenant lors du moulage de la partie fonctionnelle en matière plastique, tandis que l'autre ensemble rigide est rapporté sur le premier ensemble rigide, auquel il se fixe par encliquetage.

## Description

La présente invention concerne une pièce de structure de véhicule automobile, notamment une face avant technique.

Du document EP-370 342-B 1, on connaît une pièce de structure hybride comprenant un corps de base en forme de coquille renfermant des nervures en matière plastique.

Ces nervures sont obtenues par injection de matière plastique, lors d'un surmoulage de la coquille. Cette matière plastique traverse des perforations de la coquille et déborde sur la face externe de ladite coquille, réalisant ainsi la fixation définitive des nervures à la coquille.

Cette pièce de structure est complexe à réaliser tant du fait que le procédé de surmoulage avec débordement de matière est difficile à mettre au point, que du fait que la coquille par elle-même ne peut pas présenter une forme simple.

Il en résulte que le prix de revient d'une telle pièce est relativement élevé.

De plus, EP-370 342-B1 n'envisage pas le cas d'une pièce de structure ayant une partie servant à accueillir des organes fonctionnels, comme c'est le cas d'une face avant technique de véhicule automobile, qui doit notamment recevoir les optiques du véhicule et, par exemple, le radiateur, une serrure et des lave-vitres pour les optiques.

La présente invention vise à proposer une pièce de structure de constitution différente, dont les parties constitutives, et notamment celles correspondant à la coquille de l'état de la technique, sont plus simples à réaliser, et qui met en oeuvre un procédé de fabrication également plus simple.

La présente invention a pour objet une pièce de structure de véhicule automobile, notamment une face avant technique, comprenant une partie fonctionnelle en matière plastique moulée destinée à supporter des organes fonctionnels du véhicule et une partie structurelle destinée à résister aux différentes sollicitations mécaniques engendrées par l'utilisation du véhicule, la partie structurelle étant constituée par l'association de deux ensembles rigides à savoir, d'une part. un réseau de nervures de rigidification et, d'autre part, des renforts métalliques, la pièce de structure étant caractérisée par le fait que la partie fonctionnelle et l'un des ensembles rigides sont réalisés d'un seul tenant lors du moulage de la partie fonctionnelle en matière plastique, tandis que l'autre ensemble rigide est rapporté sur le premier ensemble rigide, auquel il se fixe par encliquetage.

La pièce de structure selon l'invention est ainsi réalisée en deux temps.

Dans un premier temps, sa partie fonctionnelle et l'un des ensembles rigides sont formés puis, dans un second temps, l'autre ensemble rigide est associé au premier.

Dans un premier mode de réalisation de l'invention, les renforts métalliques sont surmoulés lors du moulage de la partie fonctionnelle, puis le réseau de nervures est encliqueté dans les renforts métalliques.

Selon une première variante de ce mode de réalisation, les renforts métalliques comportent au moins un clip surmoulé réalisé lors du moulage de la partie fonctionnelle, ce clip servant à l'encliquetage du réseau de nervures.

Selon une autre variante, le réseau de nervures comporte des formes d'encliquetage aptes à s'encliqueter sur des flancs à bords repliés des renforts métalliques.

Dans un deuxième mode de réalisation de l'invention, le réseau de nervures et la partie fonctionnelle sont réalisés simultanément par moulage de matière plastique, et les renforts métalliques sont encliquetés sur le réseau de nervures.

Selon une première variante de ce mode de réalisation, le renfort métallique comporte au moins un orifice dans lequel pénètre une forme d'accrochage réalisée dans le réseau de nervures.

L'élasticité nécessaire à l'encliquetage peut résulter de la forme d'accrochage solidaire du réseau de nervures ou des bords de l'orifice du renfort métallique.

Dans une version préférée, la forme d'accrochage fait saillie de l'intersection de deux nervures du réseau de nervures. Des retassures peuvent alors être évitées sur la face de l'ensemble rigide opposée au renfort métallique, ladite face pouvant ainsi constituer une peau visible, éventuellement peinte.

Afin de limiter l'encombrement de la forme d'accrochage en saillie de l'intersection des nervures, ladite forme d'accrochage peut être conformée en une croix dont les branches sont strictement comprises dans l'épaisseur des nervures. Ainsi, la forme d'accrochage présente un diamètre hors-tout plus grand que l'épaisseur des nervures mais n'épaissit pas lesdites nervures dans la région de leur intersection.

Dans le but de mieux faire comprendre l'invention, on va en décrire maintenant les modes de réalisation donnés à titre d'exemples non limitatifs, en référence au dessin annexé dans lequel :
- la figure 1 est une vue de dos et en perspective d'un ensemble rigide constitué par un réseau de nervures de rigidification, d'une face avant technique selon un premier mode de réalisation,
- la figure 2 est une vue de face d'un ensemble rigide constitué par trois renforts métalliques,
- la figure 3 est une vue de face des renforts de la figure 2 surmoulés avec les parties fonctionnelles de la face avant technique,
- la figure 4 est une vue de dos de la face avant technique constituée par les renforts surmoulés de la figure 3, sur lesquels le réseau de nervures de la figure i a été rapporté,
- la figure 5 est une vue de face d'une partie d'un seul tenant d'une face avant technique selon un deuxième mode de réalisation, constituée par une partie fonctionnelle et un réseau de nervures,
- la figure 6 est une vue de dos de la partie d'un seul tenant de la figure 5, après qu'un renfort métallique supérieur a été rapporté sur la traverse supérieure du réseau de nervures,
- la figure 7 est une vue de face de la partie d'un seul tenant de la figure 5, après que deux renforts métalliques verticaux ont été rapportés sur les jambages du réseau de nervure, et
- les figures 8 à 13 illustrent différents modes d'encliquetage entre le réseau de nervures et le renfort métallique.

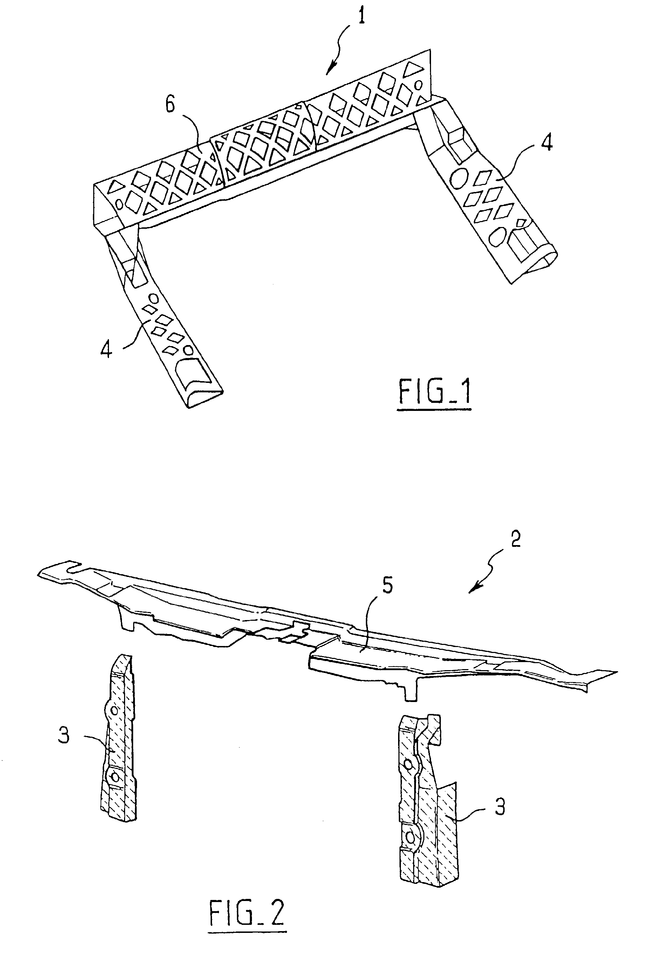

Le réseau de nervures 1 représenté à la figure 1 est réalisé par injection de polypropylène dans un moule d'injection destiné à cet effet.

Eventuellement, des fibres de renfort peuvent être incorporées à la matière plastique pour améliorer la rigidité du réseau de nervures obtenu, lequel constitue un premier ensemble rigide au sens de l'invention, constitué par une traverse supérieure 6 et deux jambages 4.

Des renforts métalliques 2, représentés à la figure 2, constituent un deuxième ensemble rigide au sens de l'invention.

Ces renforts métalliques 2 sont obtenus par déformation à froid ou estampage de plaques de tôle, pour obtenir deux jambages 3 correspondant à ceux 4 du réseau de nervures et une traverse supérieure 5, également présente en 6 sur le réseau de nervures. se prolongeant de part et d'autre des jambages 3 pour rejoindre, sur le véhicule, les renforts d'ailes de la carrosserie (non représentés).

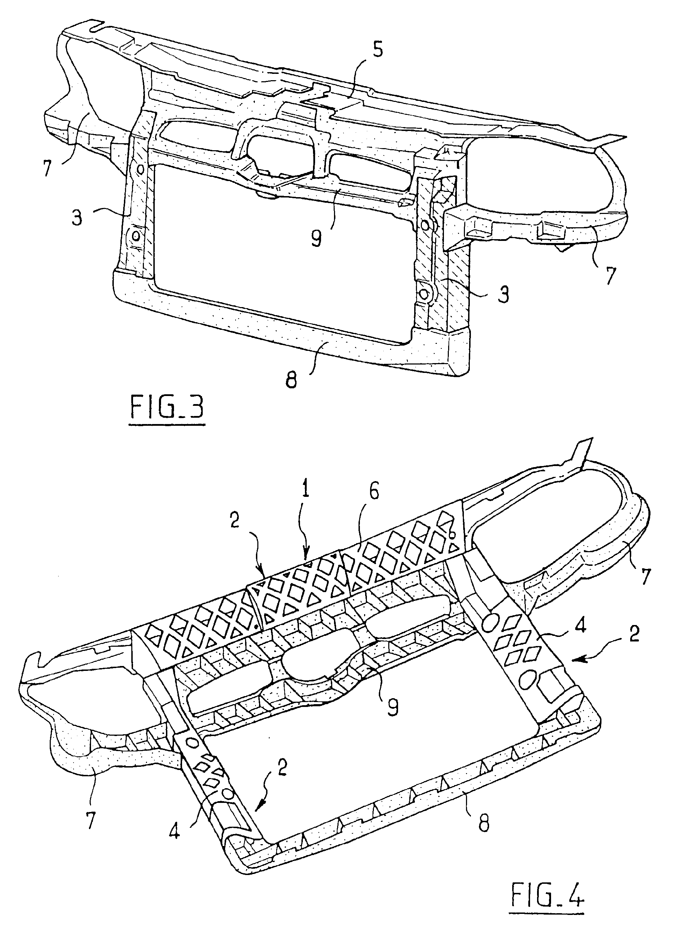

Les renforts métalliques 2 sont surmoulés de matière plastique, comme on le voit à la figure 3, pour fournir une pièce d'un seul tenant comprenant, d'une part, les renforts métalliques en tant qu'ensemble rigide appartenant à la partie structurelle de la face avant technique et, d'autre part, des parties surmoulées 7, 8, 9 constituant la partie fonctionnelle de la face avant technique.

Les parties surmoulées 7, 8, 9 délimitent notamment des logements d'optiques 7, un support de radiateur 9 et une poutre inférieure 8.

Bien que telle ne soit pas la fonction première de la partie fonctionnelle, cette dernière comporte également des nervures, notamment dans sa partie 9 en dessous de la traverse supérieure 5, dont le rôle est de rigidifier la partie supportant le radiateur et non de constituer un élément structurel du véhicule.

Comme on le voit à la figure 4, le réseau de nervures 1, qui constitue l'autre ensemble rigide de la partie structurelle de la face avant technique, vient s'encliqueter par l'arrière dans les renforts métalliques 2 pour former une face avant technique particulièrement résistante, bien que très fonctionnelle.

On comprend que la réalisation d'une telle face avant technique n'implique que des procédés simples à mettre en oeuvre, ce qui lui assure un prix de revient relativement bas.

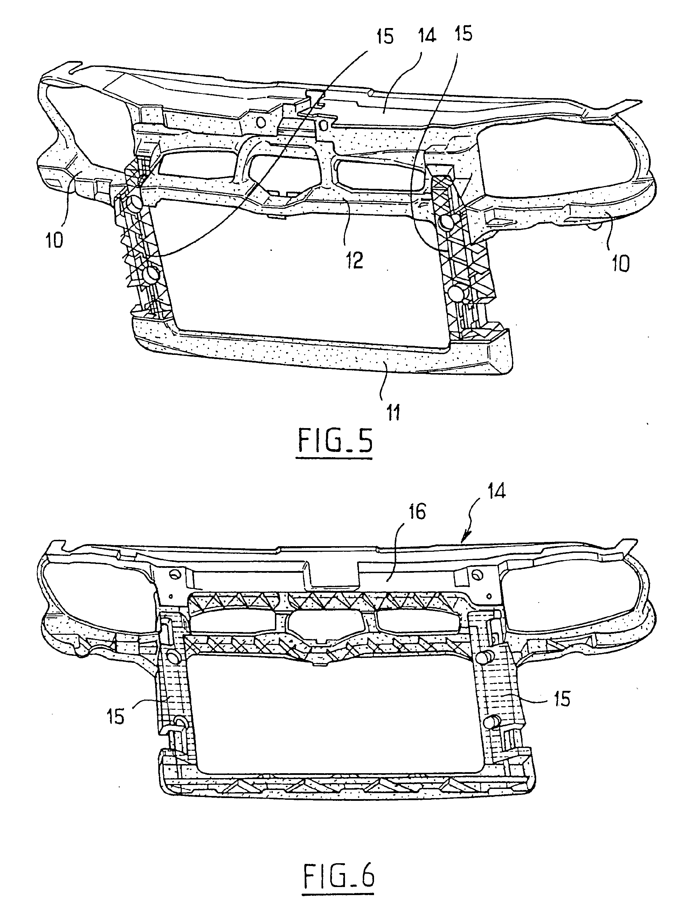

Dans le deuxième mode de réalisation décrit aux figures 5 à 7, la pièce d'un seul tenant de la face avant technique comprend une partie fonctionnelle 10, 11, 12 et un réseau de nervures 13 qui comprend une traverse supérieure 14 et deux jambages 15.

Cette pièce d'un seul tenant, qui est représentée à la figure 5, présente la même forme que la face avant technique précédemment décrite. Elle est obtenue par moulage par injection de polypropylène, éventuellement renforcé de fibres.

On distingue nettement, sur cette pièce d'un seul tenant, les parties fonctionnelles 10, 11, 12 qui correspondent aux parties surmoulées de la pièce de la figure 3, et les parties structurelles 14, 15 qui correspondent au réseau de nervures de la figure 1.

Sur cette pièce d'un seul tenant, on rapporte des renforts métalliques 16, 17 identiques à ceux de la figure 2.

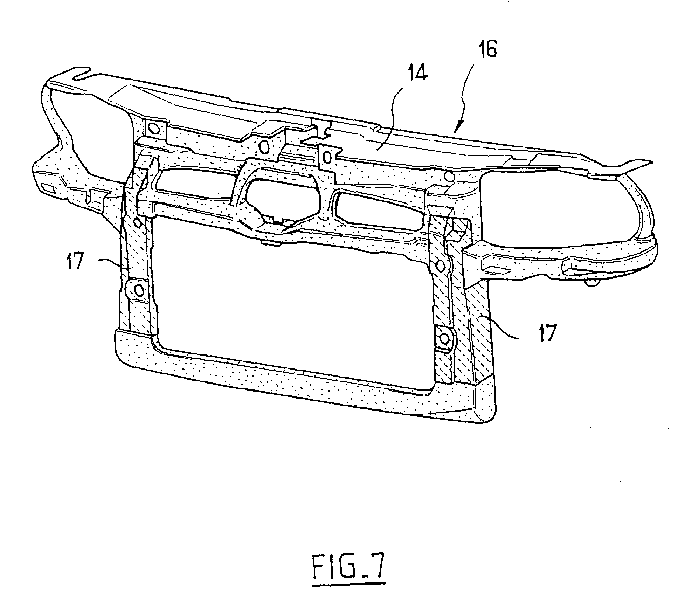

L'encliquetage du renfort métallique supérieur 16 sur la traverse 14 du réseau de nervures s'effectue par l'arrière, comme on le voit à la figure 6, tandis que celui des deux renforts métalliques verticaux 17 sur les jambages 15 du réseau de nervures s'effectue par l'avant, comme représenté à la figure 7.

Dans ce deuxième mode de réalisation, on voit que la fabrication de la face avant technique est tout aussi simple et économique.

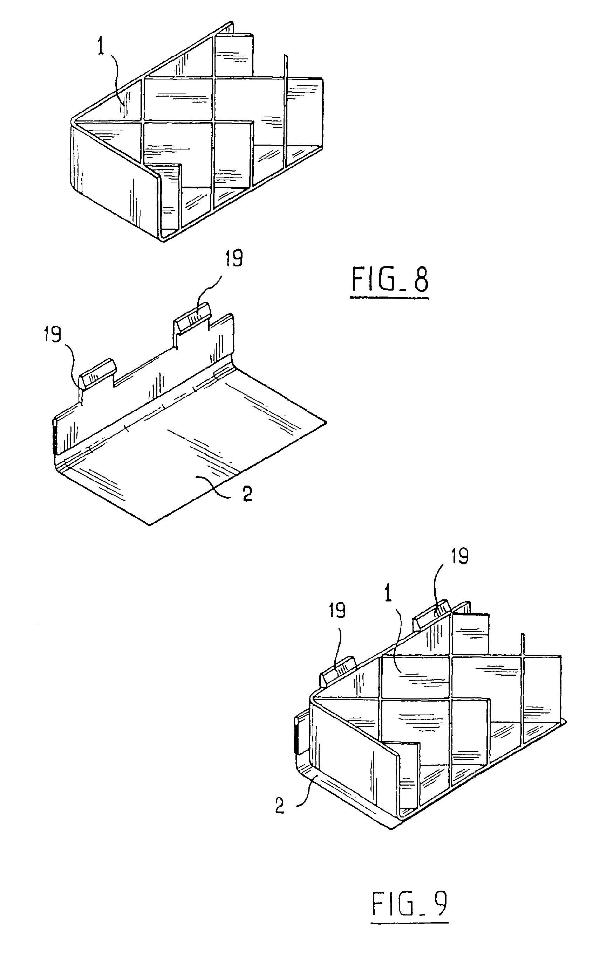

A la figure 8, on a représenté une partie du renfort métallique 2 sur lequel on a surmoulé des clips d'encliquetage 19.

Cette opération du surmoulage peut être réalisée en même temps que l'on surmoule les parties fonctionnelles de la face avant technique dans le premier mode de réalisation, pour obtenir la pièce d'un seul tenant de la figure 3.

Ces clips d'encliquetage assurent la rétention du réseau de nervures 1, comme on le voit à la figure 9.

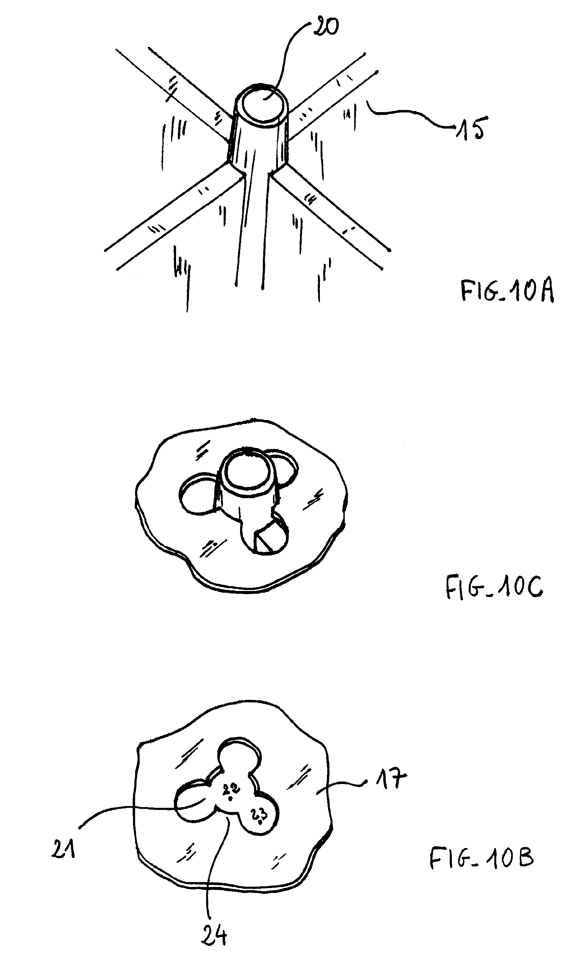

Aux figures 10A, 10B et 10C, on a illustré le mode de fixation du renfort métallique 17 de la figure 7 sur les jambages 15 de la pièce d'un seul tenant du deuxième mode de réalisation, représentée à la figure 5.

Le jambage 15.est muni d'un téton rigide 20, tandis que le renfort métallique 17 comporte une ouverture 21 en forme de trèfle qui est obtenue grâce à un perçage circulaire central 22 bordé de trois perçages circulaires périphériques 23, qui laissent entre eux trois dents 24 de serrage élastiques. La région sensiblement plane de l'ouverture 21 est légèrement incurvée.

Le téton 20 du réseau de nervures comporte un diamètre légèrement plus grand que celui du perçage central 22.

Lors de l'insertion, les dents élastiques 24 s'écartent pour permettre l'insertion du téton en se déformant vers l'arrière, dans la direction de l'incurvation de la région sensiblement plane.

Le mouvement en sens inverse du renfort métallique est rendu impossible par le fait que les dents ne peuvent plus se déformer vers l'avant pour libérer le téton.

La position du téton 20 est choisie de manière à minimiser la quantité de matière requise pour sa réalisation. A cause de la nécessaire dépouille du moule, les bases des nervures et du téton sont plus grandes au voisinage de la face opposée du jambage 15, du côté avant du véhicule, et la matière supplémentaire résultant de la présence du téton n'est en effet pas négligeable.

C'est la raison pour laquelle le téton 20 est positionné à l'intersection des nervures.

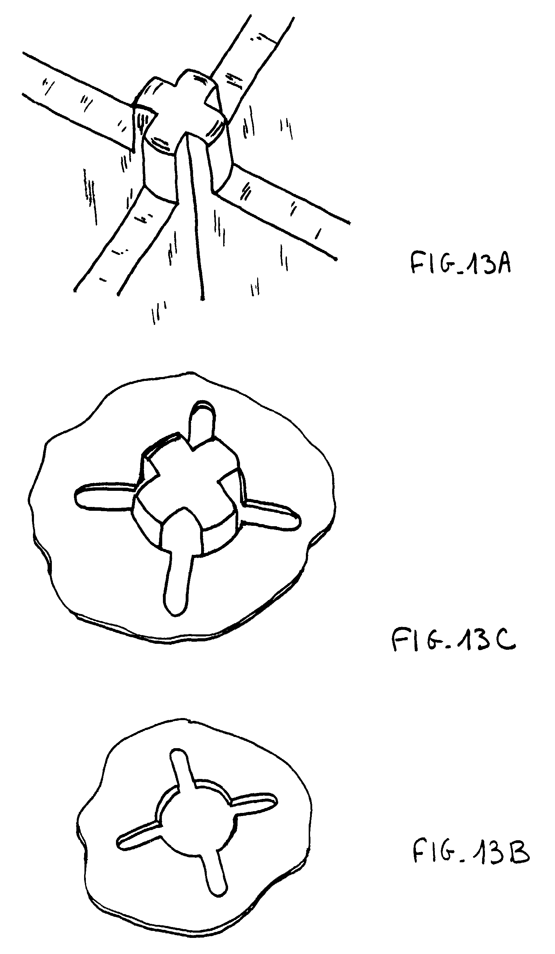

Dans le mode de réalisation des figures 13A, 13B et 13C, le téton 20' est réduit à une croix dont l'épaisseur est la même que celle des nervures.

L'encombrement du téton 20' est encore plus réduite que précédemment, ce qui contribue à l'élimination de retassures à la base du jambage.

Dans ce mode de réalisation, la partie latérale réduite du téton 20' se trouvant en appui sur le renfort métallique 17 autorise la découpe dans ce dernier d'une ouverture 21' plus simple, sans forme en trèfle comme dans les figures 10.

Dans un autre mode de réalisation (non représenté), l'ouverture 21' est un simple orifice circulaire dont le bord est tourné dans la direction de l'insertion du téton et le téton est conformé en croix.

Comme dans les précédents modes de réalisation, le bord de l'orifice mord le téton en matière plastique et retient le renfort métallique sur le jambage.

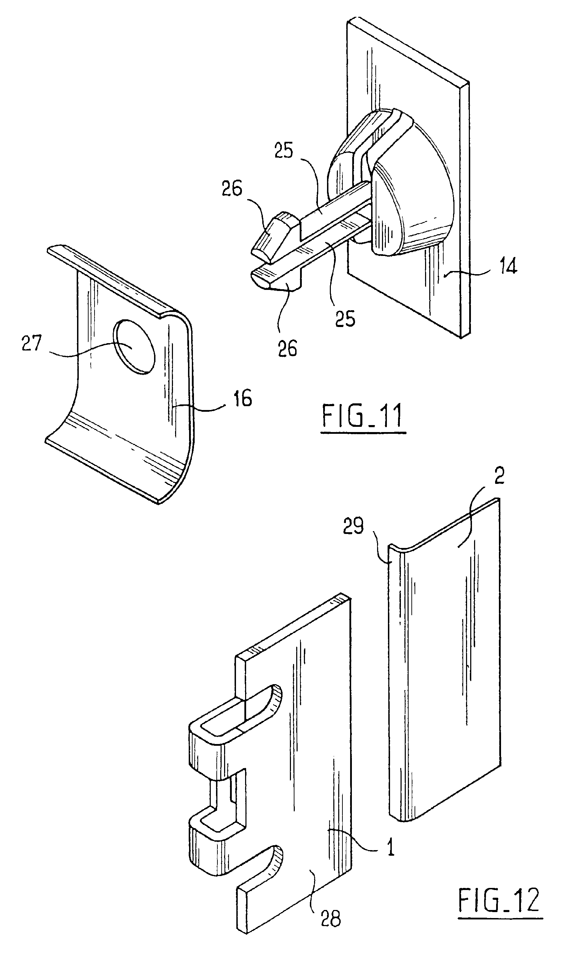

Le moyen d'encliquetage du renfort métallique 16 sur la traverse 14 du réseau de nervures, qui est illustré à la figure 11, est constitué par deux lames élastiques 25 terminées par des crochets 26 qui pénètrent et s'écartent dans un orifice 27 du renfort métallique.

A la figure 12, on a illustré un autre mode d'encliquetage du réseau de nervures 1 de la figure 1 dans les renforts métalliques 2 de la figure 2, grâce à une forme appropriée d'un des bords 28 du réseau de nervures 1, tandis que les renforts métalliques 2 comportent un bord 29 recourbé.

## Revendications

1. Pièce de structure de véhicule automobile, notamment face avant technique, comprenant une partie fonctionnelle (7 ; 8 ; 9 ; 10; 11; 12) en matière plastique moulée destinée à supporter des organes fonctionnels du véhicule et une partie structurelle destinée à résister aux différentes sollicitations mécaniques engendrées par l'utilisation du véhicule, la partie structurelle étant constituée par l'association de deux ensembles rigides à savoir, d'une part, un réseau (1 ; 13) de nervures de rigidification et, d'autre part, des renforts métalliques (2 ; 16, 17), la pièce de structure étant **caractérisée par le fait que** la partie fonctionnelle et l'un des ensembles rigides sont réalisés d'un seul tenant lors du moulage de la partie fonctionnelle en matière plastique, tandis que l'autre ensemble rigide est rapporté sur le premier ensemble rigide, auquel il se fixe par encliquetage.

2. Pièce de structure selon la revendication 1, caractérisée par le fait que les renforts métalliques (2) sont surmoulés lors du moulage de la partie fonctionnelle, puis le réseau de nervures (1) est encliqueté dans les renforts métalliques.

3. Pièce de structure selon la revendication 2, caractérisée par le fait que les renforts métalliques (2) comportent au moins un clip (19) surmoulé réalisé lors du moulage de la partie fonctionnelle, ce clip servant à l'encliquetage du réseau de nervures (1).

4. Pièce de structure selon la revendication 2, caractérisée par le fait que le réseau de nervures (1) comporte des formes d'encliquetage (28) aptes à s'encliqueter sur des flancs à bords repliés (29) des renforts métalliques (2).

5. Pièce de structure selon la revendication 1, caractérisée par le fait que le réseau de nervures (13) et la partie fonctionnelle (10, 11, 12) sont réalisés simultanément par moulage de matière plastique, et les renforts métalliques (16, 17) sont encliquetés sur le réseau de nervures.

6. Pièce de structure selon la revendication 5, caractérisée par le fait que le renfort métallique (16, 17) comporte au moins un orifice (22) dans lequel pénètre une forme d'accrochage (20, 20') réalisée dans le réseau de nervures.

7. Pièce de structure selon la revendication 6, caractérisée en ce que la forme d'encliquetage (20, 20') est positionnée à l'intersection de deux nervures.

8. Pièce de structure selon la revendication 7, caractérisée en ce que la forme d'encliquetage (20') est conformée en croix dont les branches sont strictement comprises dans l'épaisseur des nervures.
